# FASCICULE DE BREVET EUROPEEN

(11) **EP 0 850 901 B1**
(45) Date de publication et mention de la délivrance du brevet: **13.02.2002**
(21) Numéro de dépôt: 97403062.9
(22) Date de dépôt: 17.12.1997
(51) Int. Cl.: C05D 3/04, C05B 5/00, C05B 17/00

(54) **Procédé de préparation d'un amendement calcique phosphaté et amendement susceptible d'être obtenu par ce procédé**
Verfahren zur Herstellung eines Calcium Phosphat enthaltenden Bodenverbesserungsmittels und derart hergestelltes Verbesserungsmittel
Process for the obtention of a calcium phosphatic amendment and amendment obtainable thereby

(30) Priorité: 31.12.1996 FR 9616251
(43) Date de publication de la demande: 01.07.1998
(73) Titulaire: SOLLAC, 92800 Puteaux (FR)
(72) Inventeur: Cristin, Michel, 69500 - Bron (FR); Jeanne, Gérald, 59240 - Dunkerque (FR); Spannangel, Philippe, 54000 - Nancy (FR); Rose, William, 59240 - Dunkerque (FR)
(74) Mandataire: Ventavoli, Roger

(56) Documents cités:
- FR-A- 2 444 014
- FR-A- 2 708 594
- CHEMICAL ABSTRACTS, vol. 115, no. 15, 14 octobre 1991 Columbus, Ohio, US; abstract no. 158012h, SOBREMETAL LTDA: "Fertilisers from steelmaking slag" page 840; XP000194370 & BR 8 903 714 A
- CHEMICAL ABSTRACTS, vol. 72, no. 5, 2 février 1970 Columbus, Ohio, US; abstract no. 21025p, MAU, KONG T.: "Soil additives and a process for making soil additives" page 245; XP002040540 & ZA 6 805 870 A
- CHEMICAL ABSTRACTS, vol. 113, no. 23, 3 décembre 1990 Columbus, Ohio, US; abstract no. 210801q, ANDO JUMPEI: "Structure, solubility and agronomic response of industrial slags VII Minerals in converter slags and their solubility" page 664; XP000183420 & NIPPON DOJO HIRYOGAKU ZASSHI,

## Description

L'invention concerne un procédé de préparation d'un amendement calcique phosphaté à partir de laitier liquide d'aciérie et d'un composé phosphoré, notamment un composé offrant une faible biodisponibilité agronomique en phosphore, comme mentionné dans la revendication 1.

L'intérêt d'un amendement calcique phosphaté est d'une part de corriger l'acidification naturelle des sols (fonction remplie par la chaux et la magnésie contenue dans l'amendement) et d'autre part de satisfaire les besoins des plantes principalement en phosphore mais aussi en calcium, magnésium et oligo-éléments.

Les caractéristiques essentielles d'un amendement calcique phosphaté concernent donc la valeur neutralisante et la teneur en phosphore susceptible de participer réellement à la nutrition des plantes, c'est à dire la teneur en "phosphore biodisponible".

La valeur neutralisante est liée aux composants basiques de l'amendement, notamment aux composants calciques, parmi lesquels la chaux libre et la chaux des silicates saturés, dont la teneur est élevée dans les scories d'aciérie.

Pour mesurer la valeur neutralisante d'un amendement, on utilise couramment la méthode définie dans la norme NFU 44-173 : on recherche la quantité de chaux équivalente, en termes de valeur neutralisante, à 100 kg d'amendement et, par convention, le résultat obtenu est généralement exprimé en "équivalent CaO".

Pour évaluer la "biodisponibilité en phosphore", on peut par exemple utiliser une "plante-test", mais la procédure d'évaluation est longue et le choix de la "plante-test" reste discutable.

Pour évaluer la "biodisponibilité en phosphore", on peut également utiliser un modèle chimique mesurant la solubilité dans l'eau pure du phosphore contenu dans l'amendement phosphaté ; l'engrais courant appelé TriSuperPhosphate (ou "TSP") est soluble dans l'eau et sert souvent de référence.

Mais ce modèle a ses limites parce que la solution des sols ne peut généralement pas être assimilée à de l'eau pure ; en effet, la charge ionique du sol (qui dépend de son pH) modifie la solubilité des formes chimiques dans lesquelles le phosphore des engrais est engagé.

Pour évaluer la "biodisponibilité en phosphore", on peut alors utiliser des réactifs conventionnels, souvent complexants, de type citrique (par exemple : citrate de Peterman, citrate alcalin de Joulie) ou formique.

Ainsi, la norme NFU 42-212 définit un test dit "de solubilité citrique" et permet de mesurer une quantité de phosphore soluble, qui est exprimée en "P2O5", soit par rapport à la quantité totale de P2O5 contenue dans l'amendement, soit par rapport à la quantité d'amendement elle-même.

Ce test de "solubilité citrique" a souvent servi d'argument commercial et a même parfois servi de base de facturation pour des amendements phosphatés, en fonction des réglementations nationales, notamment en Allemagne.

Mais le modèle chimique sous-jacent à ce test de "solubilité citrique" a également ses limites pour évaluer la "biodisponibilité en phosphore", car, notamment, il ne prend pas en compte l'interaction de l'amendement phosphaté avec le sol lui-même.

Pour évaluer la "biodisponibilité en phosphore", on peut alors utiliser des méthodes d'échanges isotopiques d'ions phosphates, comme celle décrite par FARDEAU J.C., JAPPE J., 1976. dans C.R. Académie des Sciences, Paris, 282, 1137-1140.

Les laitiers d'aciérie désignent les produits minéraux à l'état liquide qui surnagent à la surface de l'acier liquide ; le terme "scories" désigne les mêmes produits, mais à l'état solide.

Les composés phosphorés offrant une faible biodisponibilité en phosphore sont par exemple des phosphates naturels, comme l'apatite, la pallite ou les crandalites.

Comme fertilisant calcique phosphaté préparé à partir de laitier liquide d'aciérie, on connaît depuis longtemps les scories dites "Thomas" ; ces scories proviennent de traitement en aciérie de fontes phosphoreuses ; elles présentent une valeur neutralisante de l'ordre de 40 "équivalents CaO" ainsi qu'une teneur élevée en phosphore (supérieure à 12% - exprimé en P2O5) dont la solubilité citrique est comprise entre 75% et 95% (par rapport au P2O5 contenu - mesuré selon la norme NFU 42-212).

Le brevet FR 971 818 (ARBED) décrit un procédé pour augmenter la solubilisation citrique du phosphore contenu dans les scories Thomas.

Ce document enseigne que la solubilité citrique de la scorie repose sur la présence, dans la scorie, de phosphate sous une forme minéralogique appelée silico-carnotite.

La silico-carnotite est caractérisée par la formule Ca₂SiO₄-Ca₃(PO4)₂ ou, si l'on exprime par S la silice SiO2, par C la chaux CaO et par P le P2O5, par la formule C₂S,C₃P.

Selon ce document, pour augmenter la solubilité citrique de la scorie Thomas, il convient donc d'enrichir en SiO2 le laitier de manière à augmenter la proportion de silico-carnotite.

Dans le cas des scories provenant de traitement en aciérie de fontes non phosphoreuses, leur teneur insuffisante en phosphore (souvent de l'ordre de 2% - exprimé en P2O5) ne permet pas de les utiliser concrètement comme engrais (même si le phosphore présent était biodisponible) ; leur valeur neutralisante est généralement comprise entre 50 et 54 équivalent CaO et reste donc très supérieure à celle de scories Thomas.

Le même problème de teneur insuffisante en phosphore peut également se poser pour les scories provenant de traitement d'acier au four électrique.

Pour pouvoir utiliser ces scories comme "fertilisant mixte" (au sens de la norme NFU 44-203), il convient alors de les enrichir en phosphore.

Le brevet FR 1 548 404 (FISONS) concerne un procédé de préparation d'une scorie Thomas de synthèse dans lequel on incorpore un composé phosphoré solide - comme de l'apatite - à un laitier liquide d'aciérie pour l'enrichir en phosphore.

Pour favoriser la réaction entre le laitier d'aciérie et le composé phosphoré, on incorpore le composé phosphoré à l'état finement broyé dans du laitier liquide à haute température, notamment dans le convertisseur d'aciérie.

Ce document enseigne qu'en ajoutant au laitier un composé phosphoré se présentant sous forme de phosphate d'aluminium, on aboutit à un produit présentant une solubilité citrique élevée du phosphore contenu.

Comme phosphate d'aluminium, ce document décrit notamment un aluminophosphate de calcium, comme la pseudo-wavellite ; le phosphate des mines de Thiès au Sénégal convient à cet effet.

La quantité de phosphate d'aluminium qu'on ajoute au laitier - de préférence comprise entre 20 et 35% du poids du laitier - est ajustée de manière à ce que l'aluminium forme avec le laitier de la gehlénite (Ca₂SiO₄, Al₂O₃) et à ce que le phosphore forme avec le laitier de la nagelschmidtite (2 Ca₂SiO₄ - Ca₃(PO4)₂ ou 2 C₂S,C₃P) ; pour obtenir ces phases minéralogiques, il est peut être utile de rajouter également au laitier de petites quantités de chaux et/ou de silice.

Dans ce document, un exemple comparatif illustre l'avantage de cette addition : au même laitier d'aciérie, on rajoute la même quantité de P2O5 d'une part sous forme d'apatite (phosphate tricalcique), d'autre part sous forme de phosphate de Thiès : l'amendement phosphaté obtenu présente approximativement la même teneur en P2O5 dans les deux cas (environ 13%), mais la solubilité citrique est très différente : 15% seulement du phosphate contenu dans le cas "apatite", plus de 93% du phosphate contenu dans le cas "phosphate de Thiès".

Ce document enseigne donc l'incidence importante de la nature du phosphate naturel (qu'on utilise pour enrichir en phosphore des scories d'aciérie) sur la solubilité citrique du phosphore contenu dans les scories enrichies et il semble que l'apatite ne convienne pas pour obtenir une solubilité citrique élevée.

Par ailleurs, l'utilisation du convertisseur pour faire réagir le laitier avec le composé phosphoré représente un handicap pour la production d'acier : pollution en phosphore du convertisseur et diminution de la cadence de production d'acier.

Le document CA, vol 115, n° 15, 14 octobre 1991, Columbus; abstract n° 158012h, SOBREMETAL LTDA : 'fertilisers from steelmaking slag' page 840; XP000194370 & BR8903714, décrit un procédé de prépararation de fertilisants selon lequel on injecte de l'oxygène dans un réacteur contenant du laitier liquide à 1000°C, ce qui le porte à 1090°C. On injecte ensuite des additifs (apatites, sable, feldspar, calcaire), on stoppe le processus à 1300°C, puis on granule le produit obtenu.

Le brevet FR 2 387 925 (ARBED) décrit un procédé pour enrichir les scories d'aciérie en phosphates "absorbables par les plantes", en utilisant - indirectement seulement - des phosphates naturels de type apatite.

Selon ce procédé, le phosphate naturel (de type apatite) est incorporé au laitier liquide sous forme d'un mélange préparé à l'avance, comme par exemple sous forme :
- d'une "pâte d'attaque" phosphorique préparée par mélange d'acide sulfurique concentré et de phosphate naturel (on peut aussi rajouter directement du phosphate monocalcique).
- d'un mélange (granulé) composé de phosphate naturel, de sable, de sulfate ou de carbonate de soude (ou du verre broyé) et éventuellement de charbon - ce qui correspond à la composition du phosphate dit "de Rhenania".

Cette étape intermédiaire de préparation d'un mélange à ajouter au laitier liquide est destinée à désagréger (au moins partiellement) le phosphate naturel utilisé.

L'inconvénient principal de ce procédé est qu'il nécessite une étape de préparation lourde et coûteuse du phosphate naturel d'enrichissement en phosphore du laitier liquide, passant par une transformation chimique du phosphate naturel.

Le brevet FR 2 708 594 (SOLLAC) décrit un procédé de préparation d'un amendement calcique phosphaté du type de celui décrit dans le brevet FR 1 548 404 dans lequel on fait réagir le laitier d'aciérie à faible teneur en phosphore et le composé phosphoré en les mélangeant en dehors du convertisseur :
- par ajout du composé phosphoré dans le laitier en fusion préalablement déversé dans une cuve de traitement,
- en apportant une quantité d'énergie, de préférence sous forme électrique ou sous forme d'un composé thermogène oxydant ajouté dans ce mélange, afin de maintenir le mélange à une température suffisamment élevée adaptée à une bonne réactivité.

Le composé thermogène est par exemple un ferro-alliage et/ou de l'oxygène.

Un inconvénient de ce procédé tient à la nécessité et à la difficulté d'ajouter dans le mélange un agent thermogène oxydant et au handicap économique qui en découle.

Un autre inconvénient majeur de ce procédé est qu'on obtient un amendement de faible valeur neutralisante, c'est à dire inférieure à 45 : on a en effet constaté que les conditions d'oxydo-réduction oxydantes de la réaction laitier-composé phosphoré étaient défavorables et préjudiciables à la valeur neutralisante de l'amendement obtenu.

On retrouve le même inconvénient concernant la valeur neutralisante dans des procédés dans lesquels on injecte de l'oxygène dans le mélange fondu de laitier et de composé phosphoré.

L'invention a pour but de préparer économiquement des amendements calciques phosphatés, à proportion élevée en phosphore biodisponible et à forte valeur neutralisante, à partir de laitiers liquides d'aciérie pauvres en phosphore et de composés phosphorés à faible biodisponibilité en phosphore.

L'invention a donc aussi pour but de valoriser les laitiers d'aciérie et les composés phosphorés à faible biodisponibilité en phosphore.

L'invention a également pour but de déterminer des conditions opératoires simples à mettre en oeuvre en oeuvre en aciérie, permettant de préserver la qualité de l'acier et les rythmes de production d'une aciérie.

Ainsi, l'objectif que poursuit également l'invention est d'une part de ne pénaliser en rien la production d'acier (par exemple : cadence, qualité), d'autre part de simplifier l'incorporation de composés phosphorés (par exemple : en évitant des prétraitement ou d'autres additions onéreuses).

A cet effet, l'invention a pour objet un procédé de préparation d'un amendement calcique phosphaté à partir de laitier d'aciérie à faible teneur en phosphore et d'un composé phosphoré, caractérisé en ce que on fait réagir ledit laitier et ledit composé en les mélangeant de manière homogène par projection dudit composé phosphoré sous forme granulométrique injectable dans un jet liquide dudit laitier, dans des conditions d'oxydo-réduction d'équilibre entre du fer métal (Fe⁰) et du fer ferreux (Fe⁺²), la composition et les proportions dudit composé phosphoré étant adaptées dans ledit mélange pour obtenir, à l'état refroidi, un amendement comprenant des phases silicates et silico-phosphates de calcium de type larnite (β Ca₂SiO₄ ou "C₂S") et/ou de type Ca₃₅(SiO₄)₁₆(PO₄)₂ ou « 16 C2S, C3P » incorporant le phosphore contenu dans ledit composé.

D'autres caractéristiques du procédé selon l'invention font l'objet des revendications 2 à 10.

L'invention a également pour objet un dispositif de préparation d'un amendement calcique phosphaté pour mettre en oeuvre le procédé selon l'invention caractérisé en ce qu'il comprend :
- un récipient métallurgique adapté pour contenir ledit laitier liquide, dont le contenu est déversable de manière à former un jet liquide,
- un réceptacle adapté pour recueillir le contenu se déversant en jet liquide du récipient métallurgique,
- et des moyens de projection dudit composé phosphoré, adaptés et positionnés pour projeter et injecter ledit composé dans le jet liquide de déversement dudit récipient métallurgique.

L'invention a enfin pour objet un amendement calcique phosphaté du type contenant plus de 35% en poids de phases silicates et silico-phosphates de calcium, susceptible d'être obtenu par le procédé selon l'invention, caractérisé en ce que :
- lesdites phases silicates et silico-phosphates sont de type larnite (β Ca₂SiO₄ ou "C₂S") et/ou de type Ca₃₅(SiO₄)₁₆(PO₄)₂ ou « 16 C2S, C3P », à l'exclusion des phases nagelschmidtite et silicocarnotite,
- la proportion moyenne de phosphore, exprimée en P2O5, dans lesdites phases silicates et silico-phosphates est supérieure à 6 % et inférieure à 21,5 %,
- plus de 90% du magnésium contenu dans ledit amendement est, soit à l'état libre, soit en substitution dans une wüstite.

D'autres caractéristiques de l'amendement selon l'invention font l'objet des revendications 13 à 15.

L'invention sera mieux comprise à la lecture de la description qui va suivre, donnée à titre d'exemple non limitatif de mise en oeuvre de l'invention et en référence et en référence aux figures annexées sur lesquelles :
- les figures 1 et 2 représentent, en relation avec l'exemple 3, des diagrammes de diffraction de Rayons X de silicophosphates de calcium, avec en abscisse l'intensité de diffraction et en ordonnée l'angle (2 thêta) de diffraction.
- la figure 3 représente la composition des phases silicates et silico-phosphates de l'amendement obtenu dans quatre cas représentatifs de l'invention - point en forme d'astérisque - dans un diagramme ternaire.

Le dispositif utilisé pour la mise en oeuvre du procédé selon l'invention comporte :
- un récipient métallurgique dont le contenu - notamment du laitier - est déversable de manière à créer un jet liquide ;
- une cuve de transfert adaptée pour recueillir le laitier liquide se déversant en jet liquide du récipient métallurgique ;
- des moyens de projection d'un composé phosphoré se présentant sous forme granulométrique injectable, adaptés et positionnés pour projeter ce composé dans un jet liquide de déversement du récipient métallurgique ;
- des moyens pour déplacer et vidanger la cuve de transfert ;
- une fosse de refroidissement destinée à la vidange de la cuve de transfert.

Le récipient métallurgique utilisé est notamment un récipient de conversion de fonte (convertisseur) ou un récipient de fusion d'acier (four électrique).

Les moyens de projection du composé phosphoré comprennent par exemple une trémie destinée à contenir du composé phosphoré, et une goulotte implantée en sortie de la trémie, inclinée et orientée pour projeter ce composé dans un jet liquide de déversement du récipient métallurgique.

Ces moyens de projection peuvent également intégrer un doseur de poudre, implanté entre la trémie et la goulotte.

Selon une variante de l'invention, les moyens de projection du composé phosphoré comprennent, à la place de la goulotte, des moyens de transport pneumatique à débit massique régulé dont l'orifice de sortie est également orienté et adapté pour projeter ce composé dans un jet liquide de déversement du récipient métallurgique.

La fosse de refroidissement peut être compartimentée pour l'ordonnancement des laitiers ou scories.

On va maintenant décrire la mise en oeuvre du procédé selon l'invention à l'aide du dispositif précédemment décrit.

Selon l'invention, on cherche donc à rendre biodisponible le phosphore d'un composé phosphoré à faible biodisponibilité en phosphore en faisant réagir ce composé sur du laitier d'aciérie riche en chaux (et magnésie) mais pauvre en phosphore, pour obtenir un amendement fertilisant dont le phosphore contenu offre une biodisponibilité élevée et auquel la chaux et la magnésie contenues confèrent une valeur neutralisante élevée.

Les laitiers bruts d'aciérie qu'on utilise pour mettre en oeuvre l'invention ont une faible teneur en phosphore, c'est à dire que, sans traitement particulier, on obtient des scories ayant une fonction "engrais" de trop faible intensité pour qu'on puisse les utiliser telles quelles comme fertilisants mixtes.

La teneur en phosphore, exprimée en P2O5, de tels laitiers bruts est en général inférieure à 3%, et se situe couramment autour de 2%.

De telles scories ne contiennent pas ou peu de phases ayant une fonction "engrais" reconnue, notamment pas de silico-carnotite, pas ou peu de nagelschmidite.

Par contre, la valeur neutralisante de telles scories brutes d'aciérie reste élevée et est généralement comprise entre 50 et 54 équivalent CaO.

Le laitier d'aciérie qu'on utilise ici pour mettre en oeuvre l'invention provient directement de la conversion de fonte non phosphoreuse, par exemple de fonte hématite.

Selon l'invention, on utilise un laitier permettant d'obtenir des conditions d'oxydo-réduction d'équilibre entre le fer métal (Fe⁰) et le fer ferreux (Fe⁺²).

De préférence, on utilise un laitier s'écoulant directement d'un récipient métallurgique où il a été maintenu au contact d'acier liquide, et/ou contenant même de l'acier (fer métal), par exemple entre 1% et 5%, l'acier contenu dans le laitier jouant alors le rôle d'agent réducteur : un tel laitier réunit en effet les conditions d'oxydo-réduction d'équilibre entre le fer métal (Fe⁰) et le fer ferreux (Fe⁺²).

On a constaté qu'une scorie brute d'aciérie, pauvre en phosphore, comprenait une ou plusieurs phases prépondérantes de type larnite (β Ca₂SiO₄ ou "C₂S"), silicate ou silico-phosphate, et que cette phase de type larnite renfermait la plus grande partie du phosphore présent dans la scorie.

A titre d'exemple représentatif, on présente les résultats d'analyse de la composition d'une scorie brute d'aciérie (déterminés par fluorescence X) : CaO : 43,6% - SiO2 : 14,0% - Fe2O3 : 28,9% - MgO : 6,2% - Mn2O3 : 2,5% - P2O5 : 2,1% - Al2O3 : 2,05% - TiO2 : 0,65%.

L'analyse des spectres dits « Mössbauer » de cette scorie montre la répartition suivante du fer contenu :
- 9% dit « ordonné » dans une structure ferrite appelée brownmillérite,
- 6% dit « ordonné » dans une structure spinelle,
- 3% dit « ordonné » sous forme de fer métal,
- 75% de Fe²⁺ paramagnétique,
- 7% de Fe⁺³ paramagnétique.

La part du fer à l'état ferreux est prédominante et se retrouve sous forme de wüstite substituée au magnésium.

La part du fer ferrique est essentiellement engagée dans une phase de ferrite de calcium de type brownmillérite, substituée à l'aluminium et au titane.

La phase prédominante est celle des silicates de calcium de type larnite, dans lesquels on trouve des silico-phosphates de calcium,

On a constaté que les phases autres que celles de type larnite contenaient moins de 1% de phosphore, exprimé en P2O5.

A l'inverse, la teneur en P2O5 des phases prédominanres de type larnite est supérieure à 1% ; cette teneur plus élevée indique que les phases de type larnite renferment la plus grande partie du phosphore de la scorie.

Pour mettre en oeuvre l'invention, on peut utiliser d'autres laitiers pauvres en phosphore, de même type que ceux précédemment décrits, provenant par exemple de fours électriques.

L'invention a pour but de faire réagir un composé phosphoré (riche en phosphore mais peu valorisable du fait de la faible biodisponibilité de ce phosphore) sur un laitier pauvre en phosphore de manière à augmenter sensiblement les proportions de phosphore dans ces phases de type larnite, en limitant (voire en évitant) l'introduction de phosphore dans d'autres phases présentes (où le phosphore serait peu ou pas biodisponible) : ainsi, le phosphore provenant du composé phosphoré devient biodisponible parce qu'il est introduit, selon l'invention, dans des phases de type larnite, sans que l'on ait forcément créé des phases de type silico-carnotite ou nagelschmidite.

On a constaté que, alors que les ajouts de phosphore restaient trop faibles pour former de la nagelschmidite, encore moins de la silico-carnotite, on pouvait néanmoins, lors de cette opération, former une nouvelle phase silicophosphate, proche de la larnite, de composition (Ca₃₅(SiO₄)₁₆(PO4)₂ ou 16 C₂S, 1 C₃P.

La teneur en phosphore de cette phase se situe entre celle de la larnite "pure" (β Ca₂SiO₄ ou C₂S) et celle de la Nagelschmidtite (Ca₇(SiO₄)₂(PO₄)₂ ou 2C₂S,C₃P) ; les caractéristiques de cette nouvelle phase sont précisées dans l'exemple 3.

L'invention a également pour but de faire réagir ce mélange de laitier et de composé phosphoré de manière à ce que la chaux et la magnésie contenues, notamment dans le laitier, confèrent au produit obtenu une valeur neutralisante élevée ; cet objectif peut être atteint si les conditions d'oxydo-réduction de réaction sont telles que l'on maintient un équilibre entre le fer métal (Fe⁰) et le fer ferreux (Fe⁺²) contenus dans le mélange.

Sans vouloir donner d'explication définitive, il semble que ces conditions d'oxydo-réduction sont adaptées pour obtenir une proportion maximale de fer ferreux (Fe²⁺) sous forme de wüstite et une proportion minimale de fer ferrique (Fe³⁺) sous forme de browmillérite.

Sans vouloir donner d'explication définitive, il semble que la relation entre la valeur neutralisante du produit obtenu et les conditions d'oxydo-réduction puissent s'expliquer comme suit :

La ferrite de calcium de type bronwmillérite est une phase très stable qui incorpore de la magnésie et cette magnésie incorporée ne peut plus participer de manière significative à la valeur neutralisante.

A l'inverse, la wüstite est une phase instable et la magnésie incorporée dans cette phase peut toujours participer de manière significative à la valeur neutralisante.

Les conditions d'oxydo-réduction qui permettent de maintenir un équilibre entre du fer métal (Fe⁰) et du fer ferreux (Fe⁺²) seraient donc particulièrement adaptées pour limiter la formation de ferrites et pour que plus de 90% du magnésium contenu dans l'amendement obtenu soit libre ou en substitution dans une wüstite de manière à pouvoir participer de manière significative à l'action neutralisante de l'amendement.

Avant de procéder au mélange du laitier et de composé phosphoré à l'aide du dispositif précédemment décrit, on détermine d'une manière connue en elle-même les proportions de composé phosphoré qu'il convient d'ajouter au laitier pour augmenter la proportion moyenne de phosphore dans les phases silicates et phosphosilicates dudit laitier de manière à obtenir un amendement fertilisant présentant une teneur en phosphore biodisponible suffisantes pour une utilisation agricole.

De préférence, on vise des amendements ayant une teneur globale en phosphore, exprimée en P2O5, comprise entre 3% et 9% - ce qui correspond à la définition des fertilisants mixtes selon la norme NFU 44-203 - et présentant au moins 35% de phases silicates et silicophosphates de type larnite et de type « 16 C₂S, 1 C₃P » - c'est à dire des phases où le phosphore contenu est biodisponible.

Pour que le phosphore contenu dans l'amendement obtenu présente une biodisponibilité élevée, il importe que le phosphore apporté par le composé soit incorporé au mieux dans les phases de type larnite et de type « 16 C₂S, 1 C₃P », ce qui nécessite d'opérer selon l'invention dans les meilleures conditions réactionnelles possibles (laitier + composé phosphoré), notamment en limitant la proportion de composé phosphoré qu'on ajoute au laitier.

En effet, comme le composé phosphoré est ajouté à l'état solide dans un laitier à l'état liquide, une proportion trop élevée abaisserait la température du mélange au point de nuire à une réaction satisfaisante du composé phosphoré avec le laitier.

Et comme la proportion de composé phosphoré qu'on ajoute au laitier est faible, la teneur en phosphore, exprimée en P2O5, dans les phases de type larnite et de type «16 C₂S, 1 C₃P » reste en pratique inférieure à 21,5% (teneur en P2O5 de la nagelschmidite) et on ne forme pas de phases de type silico-carnotite («C2S, C3P » ou « C5SP ») et pas ou peu de phases de type nagelschmidite (« 2 C2S, C3P » ou « C7S2P »).

En pratique, pour obtenir un amendement à fonction engrais reconnue, la teneur en phosphore, exprimée en P2O5, dans les phases de type larnite et de type « 16 C₂S, C₃P » doit être de préférence supérieure à 6%.

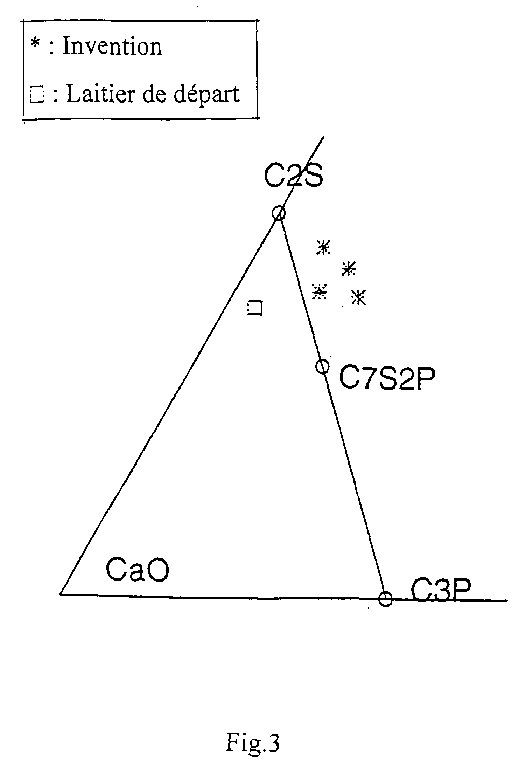

La figure 3 représente la composition des phases silicates et silico-phosphates de l'amendement obtenu dans quatre cas représentatifs de l'invention - point en forme d'astérisque - dans un diagramme ternaire CaO (= « C »), C2S, C3P.

On a situé également sur ce diagramme :
- la composition des phases silicates et silico-phosphates du laitier de départ - carré « blanc » sur la figure.
- la position de la Nagelschmidite C7S2P.

Dans les cas présentés ici, la composition et les proportions du composé phosphoré sont adaptés pour que les phases silicates et silico-phosphates aient une composition intermédiaire entre celle de la larnite sans phosphore (« C2S ») et celle de la nagelschmidite (« C7S2P ») et soient plus riches en silice que le laitier de départ et que la larnite et la nagelschmidite - positionnés à droite de la ligne C2S- C7S2P sur le diagramme.

Dans les cas présentés ici, la teneur en phosphore, exprimée en P2O5, reste bien comprise entre 6% et 21,5% dans les phases silicates et silico-phosphates de l'amendement.

Comme composé phosphoré, on peut notamment utiliser des minerais naturels de phosphates - de préférence calcinés - à faible valorisation agronomique, qu'il s'agisse de phosphates calciques ou alumino-calciques, par exemple des apatites, des pallites ou des crandalites.

La faible biodisponibilité agronomique en phosphore ou la faible valorisation agronomique d'un composé phosphoré peut être évaluée par la méthode suivante.

Le composé à évaluer est broyé et passé en totalité au tamis de 0,25 mm ; à 15 g de sol sec, on ajoute 4,5 mg d'équivalent phosphore en composé à évaluer, soit 4,5 mgP, ce qui donne un dosage de 300 ppm en phosphore, soit 300 ppmP ; par dilution successives avec le sol sec, on prépare deux autres échantillons respectivement à 100 ppmP et 33 ppmP.

La dose de 33 ppmP correspond à un apport homogène de 229 kg d'équivalent P2O5 par hectare, c'est à dire à une fertilisation forte de redressement dans un sol de densité 1,5 où les plantes explorent un horizon de profondeur 20 cm.

Pour l'évaluation du composé, sur chaque échantillon préparé avec un sol donné, on effectue une détermination des caractéristiques des cinétiques de dilution isotopique des ions phosphates PO₄²⁻ ; on mesure notamment la masse de phosphore M₁ en µg pour 10 millilitre (ml) de solution de sol.

Les résultats obtenus, représentatifs de composés à faible biodisponibilité agronomique en phosphore ( comp. 1 : phosphate naturel - comp. 2 : phosphate de THIÈS), sont indiqués au tableau ci-dessous en µg pour 10 ml (M₁) pour trois sols différents ( sol 1 : Saint Damage - sol 2 : Saint Nicolas - sol 3 : Saint Jude) ; par comparaison, on présente également les résultats d'un composé à forte biodisponibilité agronomique en phosphore, le triple superphosphate (TSP).

| Composé fertilisant: | sans | comp. 1 | | | comp. 2 | | | TSP | | |
|---|---|---|---|---|---|---|---|---|---|---|
| Échantillon ppmP | 0 | 33 | 100 | 300 | 33 | 100 | 300 | 33 | 100 | 300 |
| sur Sol 1 | 3,0 | 2,5 | 2,5 | 3,3 | 2,8 | 2,9 | 3,6 | 9,7 | 23 | 187 |
| sur Sol 2 | 0,7 | 0,9 | 2,0 | 5,3 | 0,9 | 0,9 | 0,8 | 0,9 | 4,8 | 34 |
| surSol3 | 9,1 | - | - | - | 8,9 | 9,8 | 9,8 | - | - | - |

On voit donc que, pour les composés à faible biodisponibilité agronomique en phosphore, la cinétique de dilution isotopique des ions phosphates PO₄²⁻ n'augmente pas sensiblement avec la teneur en phosphore de l'échantillon, contrairement au cas du TSP ; pour ces composés, on voit également que la concentration de phosphore reste faible dans la solution de sol.

Enfin, la présence d'éléments alcalins dans le composé phosphoré peut être avantageuse pour activer la réaction du mélange formé et/ou pour augmenter la solubilité citrique de l'amendement obtenu : on peut utiliser à cet effet des phosphates et/ou des silicates de sodium ou de potassium, ou, comme autre ressource alcaline, des résidus ou des boues de traitement.

Morphologiquement, le composé phosphoré est préparé sous forme de grains présentant une répartition de taille adaptée à un bon écoulement dans les moyens de projection, c'est à dire qu'il se présente sous forme granulométrique injectable.

Le composé phosphoré est généralement préparé sous forme de poudre, de grains ou de cailloux dont le diamètre est de préférence inférieur à 8 mm.

On voit donc que la préparation du composé phosphoré ne nécessite aucune préparation coûteuse comme dans le procédé décrit dans le brevet FR 2 387 925 déjà cité.

Les proportions de composé phosphoré à rajouter au laitier étant déterminées, on peut commencer le mélange avec les charges de laitier à vidanger du récipient métallurgique : pour chaque charge de laitier Qₗ, on détermine une quantité Qₚ de composé phosphoré à faire réagir sur le laitier.

Le rythme des vidanges est fixé par la cadence de production d'acier.

Pour mettre en oeuvre le procédé selon l'invention, on déverse la quantité Qₗ de laitier liquide du récipient métallurgique dans la cuve de transfert, ce qui forme un jet liquide pendant toute la durée du déversement.

Selon l'invention, pendant la durée du déversement, à l'aide des moyens de projection, on projette dans le jet liquide la quantité Qₚ de composé phosphoré, le débit de ce composé étant adapté pendant la durée de déversement pour répartir uniformément ce composé dans toute la charge Qₗ de laitier liquide.

Le débit de jet liquide étant en général approximativement constant, on maintient donc a peu près constant également le débit de composé phosphoré.

A la sortie du récipient métallurgique, le laitier liquide est à une température supérieure à 1300°C.

Pour un récipient métallurgique de 200 tonnes d'acier environ, la quantité de laitier Qₗ est généralement comprise entre 10 et 30 tonnes.

Dans un rythme classique d'exploitation d'une aciérie, la durée de déversement reste souvent inférieure à une minute.

La quantité Qₚ de composé phosphoré est par exemple comprise entre 0,5 et 3,5 tonnes.

Ainsi, en rajoutant 1,5 tonne de composé phosphoré titrant 34% de phosphore, exprimé en P2O5, dans une charge de 10 tonnes de laitier d'aciérie titrant 2% exprimé en P2O5, on obtient un mélange à 6,2 % exprimé en P2O5.

Pour améliorer la réaction entre le composé phosphoré et le laitier, on peut également rajouter au mélange des composés fondants et/ou thermogènes, les proportions à rajouter restant moindres que dans l'art antérieur grâce au procédé de mélange selon l'invention ; il est important que ces composés permettent de maintenir les conditions d'oxydo-réduction propres à l'invention telles que décrites ci-dessus ; ainsi, de préférence, ces composés ne sont pas oxydants.

Dans le cas où les moyens de projection du composé phosphoré comportent un doseur et une goulotte, ledit doseur assure un débit approximativement constant du composé provenant de la trémie vers la goulotte et, compte tenu de l'inclinaison et de l'orientation de ladite goulotte, le composé d'apport est projeté par inertie dans le jet de déversement du récipient métallurgique.

Dans le cas où les moyens de projection du composé phosphoré comportent des moyens de transport pneumatique, le composé phosphoré est projeté par ces moyens de transport pneumatique dans le jet liquide de déversement du récipient métallurgique, de préférence sous la forme d'un jet de poudre bien focalisé.

A l'arrivée dans la cuve de transfert, le jet liquide de laitier, additionné de composé phosphoré, provoque des turbulences.

De préférence, on injecte le composé phosphoré dans le jet immédiatement en amont des turbulences que provoque le jet à son arrivée dans la cuve de transfert de manière à utiliser ces turbulences pour améliorer encore l'homogénéisation du mélange laitier + composé phosphoré.

Ce mode particulier d'injection à la base du jet facilite la mise en oeuvre du procédé, notamment lorsque la position du jet varie dans l'espace en cours de vidange.

A l'issue de la vidange du récipient métallurgique, la cuve de transfert contient donc un mélange homogène laitier-composé phosphoré encore à l'état liquide et la chaleur latente du laitier liquide d'aciérie permet de poursuivre la réaction laitier-composé phosphoré.

Lorsqu'on a rajouté dans le mélange des produits thermogènes ou fondants, le mélange reste plus longtemps liquide, ce qui favorise encore la réaction laitier-composé phosphoré.

A l'aide des moyens de déplacement de la cuve de transfert, on transfère ensuite la cuve de transfert vers la fosse de refroidissement ; pendant ce transfert, la température du mélange étant encore très élevée dans la cuve de transfert, l'homogénéisation et la réaction du mélange se poursuivent ; le transfert dure couramment de 10 à 60 minutes.

On déverse ensuite ledit mélange dans la fosse de refroidissement où on le laisse se solidifier sous forme de scories : on obtient ainsi un amendement sidérurgique phosphaté à l'état brut.

Selon une variante de l'invention, lorsqu'on ne dispose pas de cuve de transfert (et des ses moyens de déplacement), on déverse directement le laitier de la cuve métallurgique dans la fosse de refroidissement et c'est à ce niveau qu'on injecte alors le composé phosphoré dans le jet de déversement du laitier.

Selon l'invention, le mélange du composé phosphoré et du laitier d'aciérie est toujours réalisé dans un jet liquide dudit laitier, recueilli directement en sortie de récipient métallurgique là où ledit laitier est à la température la plus élevée.

Avantageusement, ce mode de mélange apporte des conditions réactionnelles optimales et aboutit à une homogénéisation très rapide du mélange tout en s'adaptant facilement aux cadences de production d'acier d'une aciérie sans risquer de nuire à la qualité de l'acier (pas de pollution en phosphore du récipient métallurgique).

Avantageusement, la réaction laitier-composé phosphoré commence donc dès la sortie du récipient métallurgique et se poursuit jusque dans la fosse de refroidissement, de manière à former des phases silicates et silicophosphates plus riches en phosphore que celles des scories brutes d'aciérie.

Le procédé selon l'invention est particulièrement économique tant en exploitation qu'en installations.

Dans la fosse de refroidissement, on peut laisser les scories obtenues se refroidir naturellement, ou bien les arroser légèrement.

On reprend ensuite les scories pour les déferrailler et les broyer d'une manière adaptée pour un épandage agricole ; cette étape de traitement physique, connue en elle-même, n'est pas décrite ici en détail.

L'amendement sidérurgique phosphaté est alors prêt à l'emploi.

L'amendement sidérurgique phosphaté obtenu présente approximativement les mêmes phases qu'un laitier brut d'aciérie, aux différences essentielles près suivantes :
- les phases silicates et silico-phosphates sont de type larnite (β Ca₂SiO₄ ou "C₂S") et/ou de type « 16 C2S, C3P », à l'exclusion des phases nagelschmidtite et silicocarnotite,
- la proportion moyenne de phosphore, exprimée en P205, dans ces phases silicates et silico-phosphates est supérieure à 6 % et inférieure à 21,5 %,
- plus de 90% du magnésium contenu dans ledit amendement est soit sous forme de magnésie libre, soit intégré à la phase wüstite.

Les teneurs en phosphore restant plus faibles dans cet amendement que dans les scories Thomas, la silico-carnotite (C₂S,C₃P) et la nagelschmidite (2 C₂S, C₃P) sont absentes (ou quasiment absentes) de l'amendement obtenu.

Comme la présence de silico-carnotite et/ou de nagelschmidite est réputée nécessaire dans ce type d'amendement pour obtenir une solubilité citrique élevée du phosphore contenu, il s'avère de fait que la solubilité citrique du phosphore contenu dans l'amendement selon l'invention peut être très médiocre ; cette solubilité citrique reste néanmoins généralement supérieure à 65%.

Pourtant, de manière surprenante, on constate que le phosphore contenu dans l'amendement selon l'invention présente une biodisponibilité, en sol acide à neutre, supérieure à celle du phosphore du TriSuperPhosphate (TSP) et largement supérieure à celle du phosphore de scories Thomas.

La présence d'éléments alcalins dans le composé phosphoré peut être avantageuse pour activer la réaction entre le laitier et le composé phosphoré, et/ou pour augmenter la solubilité citrique de l'amendement, dans le cas où les nécessités commerciales l'imposent, indépendamment de la biodisponibilité en phosphore.

L'amendement phosphaté selon l'invention présente également l'avantage, sur les formes solubles de phosphates comme le TSP, de conserver plus longtemps son efficacité fertilisante.

On constate également qu'on obtient cette forte biodisponibilité en phosphore dans des sols acides à neutres, notamment lorsqu'une partie au moins du phosphore se présente dans l'amendement sous une forme minéralogique nouvelle de formule (16 C₂S, C₃P).

Comme les proportions de composé phosphoré qu'on ajoute au laitier peuvent être facilement adaptées pour obtenir un amendement contenant entre 3% et 9% de phosphore exprimé en P2O5 et que l'amendement obtenu présente une valeur neutralisante élevée (supérieure à 43 équivalent CaO), on obtient un amendement fertilisant particulièrement équilibré, adapté à la fois aux besoins en phosphore des plantes et à la correction de l'acidification naturelle des sols.

Le fait de faire réagir le composé phosphoré sur du laitier liquide s'écoulant directement d'un récipient métallurgique où il a été soumis à des conditions d'oxydo-réduction spécifiques déjà décrites est un moyen privilégié pour obtenir un amendement de forte valeur neutralisante.

C'est pourquoi l'utilisation d'un laitier liquide ayant été maintenu au contact d'acier liquide, contenant de préférence de l'acier (fer métal), par exemple entre 1% et 5%, convient particulièrement bien pour la mise en oeuvre du procédé selon l'invention, notamment pour obtenir directement des amendements phosphatés à haute valeur neutralisante.

L'acier contenu dans le laitier liquide joue donc le rôle d'agent réducteur et assure donc des conditions d'oxydo-réduction réductrices qui conviennent particulièrement bien pour la synthèse de l'amendement selon l'invention.

Avantageusement, lorsqu'on a rajouté au mélange des composés thermogènes et/ou fondants qui ne sont pas oxydants, on obtient une valeur neutralisante plus élevée que si l'on avait rajouté, comme dans l'art antérieur, des composés thermogènes oxydants.

Alors que les objectifs de forte valeur neutralisante et de teneur élevée en phosphore sont réputées contradictoires, on est parvenu, grâce à l'invention, à préparer directement des amendements calciques phosphatés de valeur neutralisante de valeur supérieure ou égale à 45 et de teneur en phosphore au moins égale à 5% (exprimée en P2O5).

Et, de manière surprenante, même si la teneur en phosphore de l'amendement est au plus égale à 7,5% (exprimée en P2O5), on conserve une fonction engrais tout à fait appréciable.

L'efficacité agronomique de l'amendement obtenu, notamment sa valeur neutralisante, serait plus faible si l'on utilisait des laitiers liquides "refondus" sans addition d'agents réducteurs.

Grâce à l'invention, on aboutit donc à un amendement fertilisant présentant à la fois une très bonne efficacité alimentaire en phosphore pour les plantes et une forte valeur neutralisante par un procédé économique, fonctionnant en ligne avec l'aciérie, sur une installation simple et économique.

En effet, un avantage de l'invention est qu'il permet de traiter les laitiers directement en sortie d'aciérie, sans contrarier le rythme normal des coulées d'acier puisqu'on rajoute le composé phosphoré directement dans le flux normal des laitiers.

Un autre avantage significatif de l'invention est de valoriser le phosphore contenu dans des composés phosphorés à phosphore biodisponible faible (comme des apatites) sans préparation coûteuse.

Sans se départir de la présente invention, pour préparer l'amendement calcique phosphaté selon l'invention, on peut utiliser d'autres laitiers d'affinage que ceux des fontes hématites, comme par exemple des laitiers d'aciérie de four électrique.

Les amendements phosphatés obtenus à partir de laitiers d'aciérie de fours électriques peuvent cependant présenter une valeur neutralisante plus faible et poser des problèmes relatifs à la quantité d'éléments métalliques indésirables qu'ils contiennent, qui dépend des ferrailles utilisées pour la fabrication de l'acier.

Les exemples suivants illustrent l'invention.

### Exemple 1 :

Cet exemple a pour but d'illustrer un mode particulier de mise en oeuvre du procédé selon l'invention, dans lequel le composé phosphoré qu'on ajouté au laitier d'aciérie est un mélange de deux phosphates naturels.

Comme matières premières pour l'amendement, on utilise :
- 14 tonnes de laitier liquide d'aciérie se déversant directement d'un convertisseur de fonte hématite.
- 2 tonnes de composé phosphoré constitué de deux phosphates naturels mélangés de manière homogène, préparé à partir de 1,6 tonne de phosphate alumino-calcique calciné ("PACc") criblé à 8 mm (moyenne) et de 0,4 tonne d'apatite calcinée ("PNc") criblé à 0,1 mm (moyenne) ; ce type de mélange est une opération préalable, simple et économique.

Les proportions de composé phosphoré ont été adaptées pour obtenir un amendement contenant environ 6% de phosphore (exprimé en P2O5) tout en présentant une valeur neutralisante au moins égale à 45.

Pour projeter cette quantité de composé phosphoré dans le laitier liquide au moment où on le déverse du convertisseur dans une cuve de transfert à l'issue d'une opération normale de production d'acier, on utilise des moyens de transport pneumatique activés par un gaz vecteur, comportant une buse de projection orientée vers le jet liquide de déversement du laitier.

Le diamètre de la buse de projection en sortie est de 170 mm environ.

Comme le jet liquide se déplace au cours de l'opération de vidange du convertisseur, on déplace la cuve de transfert pour la maintenir sous le jet liquide et on asservit la position de la buse de projection au déplacement de la cuve.

Le gaz vecteur qu'on utilise est de l'azote à une pression de 2,5 10⁵ Pa de telle sorte que la vitesse de la poudre de composé phosphoré en sortie de buse de projection atteint 20 m/s environ.

La distance entre la sortie de buse et le jet liquide est comprise entre 3 et 4 mètres environ ; l'angle que fait l'axe de cette buse avec l'horizontale est de 30° environ ; la hauteur entre d'une part la zone de convergence de la poudre de composé phosphoré et du jet liquide de laitier et d'autre part la cuve de transfert est de 0,5 m environ.

La durée de vidange du laitier est comprise entre 1 et 1,5 minute, ce qui nécessite un débit de poudre de composé phosphoré de environ 2 tonnes/minute.

Le transfert de la cuve contenant le mélange laitier-composé phosphoré prend entre 10 et 30 minutes, à l'issue desquelles on déverse le mélange dans une fosse de refroidissement.

On laisse ensuite le mélange se refroidir naturellement pendant deux jours environ, sans arrosage intermédiaire mais avec un arrosage final.

Le mélange refroidi est ensuite déferraillé puis broyé dans des broyeurs à cylindres en vue d'obtenir les caractéristiques granulométriques suivantes : 75% de produit passant à la maille de 160 µm et au moins 96% de passant à la maille de 630 µm.

On obtient alors un amendement calcique phosphaté à 6,2% de phosphore (exprimé en P2O5) présentant une solubilité citrique de 81%, dont la valeur neutralisante s'élève à 48.

La solubilité citrique est relativement importante malgré l'utilisation d'apatite dans le composé phosphoré.

On constate que le phosphore apporté par cet amendement offre une biodisponibilité très élevée, ce qui confère à l'amendement la fonction engrais recherchée.

Le tableau ci-dessous récapitule la composition des produits:

| Composition | Total | P2O5 | CaO | MgO | SiO2 | Al2O3 | Fe | MnO |
|---|---|---|---|---|---|---|---|---|
| Laitier | 14,0 **t** | 2,4% | 53,9% | 5,1% | 15,8% | 2,5% | 17,3% | 2,7% |
| PACc | 1,6 **t** | 33,5% | 10,0% | 0,3% | 2,9% | 31,1% | 6,4% | 0,0% |
| PNc | 0,4 **t** | 34,0% | 54,7% | 1,0% | 1,8% | 0,5% | - | - |
| Amendement | 16,3 **t** | 6,2% | 50,4% | 4,6% | 14,4% | 5,4% | 12,8% | 2,4% |

On constate que, malgré le déferraillage, le poids d'amendement obtenu dépasse la somme du poids des matières premières utilisées, ce qui indique que l'amendement refroidi s'est hydraté et/ou carbonaté.

### Exemple 2 :

Cet exemple a pour but d'illustrer un autre mode particulier de mise en oeuvre du procédé selon l'invention, dans lequel le composé phosphoré qu'on ajoute au laitier d'aciérie est uniquement constitué d'un phosphate alumino-calcique.

Comme matières premières pour l'amendement, on utilise :
- 24,5 tonnes de laitier liquide d'aciérie se déversant directement d'un convertisseur de fonte hématite.
- 3,5 tonnes de phosphate alumino-calcique calciné ("PACc") broyé à 0,8 mm (moyenne)

Les proportions de composé phosphoré ont été, comme dans l'exemple 1, adaptées pour obtenir un amendement contenant environ 6% de phosphore (exprimé en P2O5) tout en présentant une valeur neutralisante au moins égale à 45.

Pour projeter cette quantité de composé phosphoré dans le laitier liquide au moment où on le déverse du convertisseur dans une cuve de transfert à l'issue d'une opération normale de production d'acier, on utilise une goulotte inclinée à 60° environ par rapport à l'horizontale en direction du jet de déversement.

La distance entre la sortie de goulotte et le jet liquide est inférieure à 2 m ; la hauteur entre d'une part la zone de convergence de la poudre de composé phosphoré et du jet liquide de laitier et d'autre part la cuve de transfert est comprise entre 1 et 1,5 mètres environ.

La durée de vidange du laitier est comprise entre 1 et 2 minutes, ce qui nécessite un débit de poudre de composé phosphoré compris entre 1,75 et 3,5 tonnes/minute.

Le transfert de la cuve contenant le mélange laitier-composé phosphoré dure de 15 à 20 minutes environ, à l'issue desquelles on déverse le mélange dans une fosse de refroidissement.

On laisse ensuite le mélange se refroidir naturellement pendant sept jours environ, en arrosant le septième jour.

Le mélange refroidi est ensuite déferraillé puis broyé comme dans l'exemple 1.

On obtient alors un amendement calcique phosphaté à 6% de phosphore (exprimé en P2O5) présentant une solubilité citrique de 69%, dont la valeur neutralisante s'élève à 45.

On constate que le phosphore apporté par cet amendement offre une biodisponibilité aussi élevée que dans le cas de l'exemple 1, alors que la solubilité citrique est pourtant beaucoup plus faible.

Le tableau ci-dessous récapitule la composition des produits :

| Composition | Total | P2O5 | CaO | MgO | SiO2 | Al2O3 | Fe | MnO |
|---|---|---|---|---|---|---|---|---|
| Laitier | 24,5 **t** | 2,1% | 53,0% | 6,5% | 16,1% | 0,9% | 21,6% | 2,2% |
| PACc | 3,5 **t** | 34,0% | 10,0% | 0,3% | 2,9% | 31,1% | 6,4% | 0,0% |
| Amendement | 27,6 **t** | 6,0% | 47,0% | 5,6% | 14,3% | 4,6% | 15,5% | 1,9% |

### Exemple 3 :

Cet exemple a pour but d'illustrer les caractéristiques en diffraction de rayons X de la phase minéralogique nouvelle de composition (Ca₃₅(SiO₄)₁₆(PO4)₂ ou 16 C₂S, 1 C₃P) mise en évidence dans des amendements calciques phosphatés selon l'invention.

La teneur en phosphore de cette phase se situe entre celle de la larnite "pure" (β Ca₂SiO₄ ou C₂S) et celle de la Nagelschmidtite (Ca₇(SiO₄)₂(PO₄)₂ ou 2C₂S,C₃P).

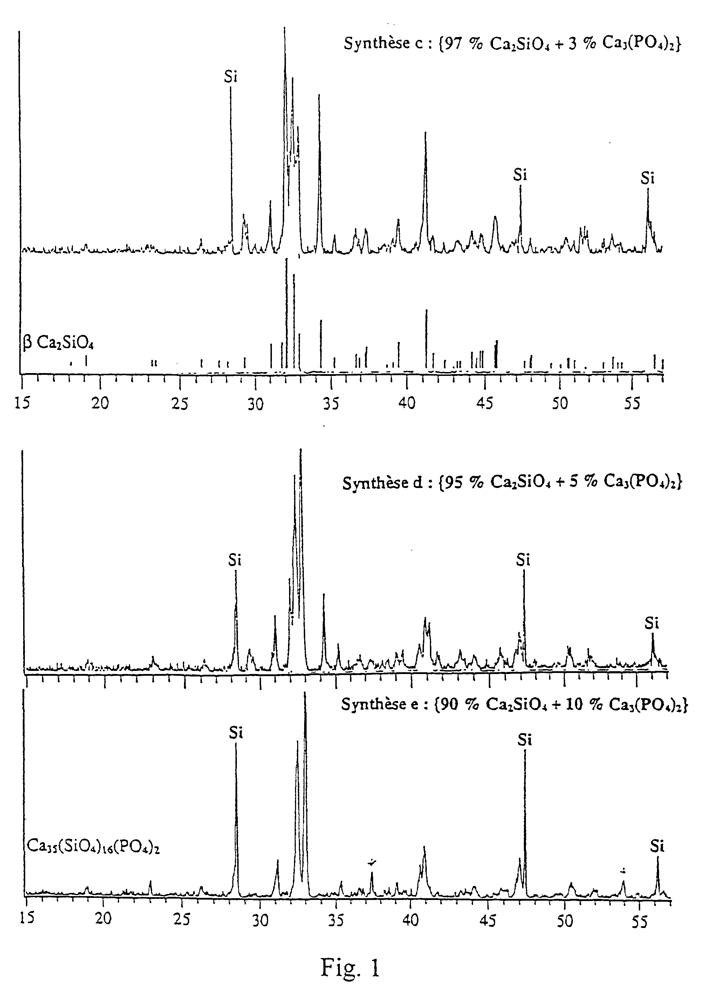

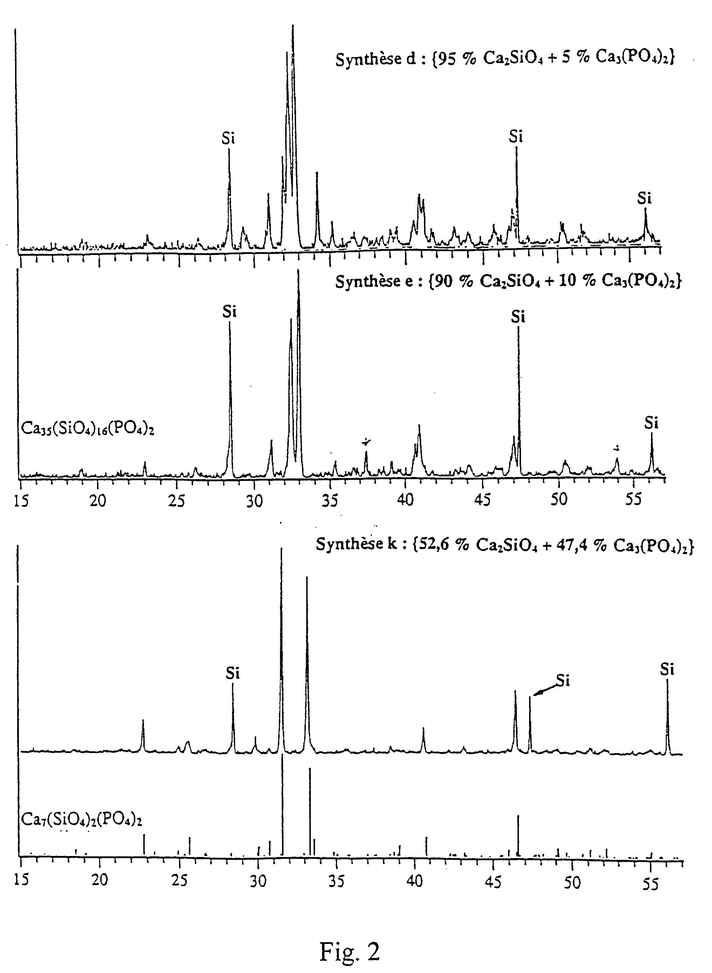

Pour bien mettre en évidence ces caractéristiques (de diffraction) par rapport à celles de ces deux autres phases, on a préparé quatre produits de synthèse à haute température dont les diagrammes de diffraction de rayons X sont représentés sur les figures 1 et 2 :
- Synthèse c : {97% Ca₂SiO₄ + 3% Ca₃(PO₄)₂} donnant un produit très proche de la larnite "pure" β Ca₂SiO₄.
- Synthèse d : {95% Ca₂SiO₄ + 5% Ca₃(PO₄)₂} et synthèse e : {90% Ca₂SiO₄ + 10% Ca₃(PO₄)₂} donnant des produits très proches de la nouvelle phase présente dans les amendements selon l'invention.
- Synthèse k : {52,6% Ca₂SiO₄ + 47,4% Ca₃(PO₄)₂} donnant un produit très proche de la Nagelschmidtite Ca₇(SiO₄)₂(PO₄)₂.

Sur la figure 1, a été également reporté, dans la partie supérieure "synthèse c", la fiche type JCPDS 33-0302 de la larnite "pure" β Ca₂SiO₄.

Sur cette figure 1, on remarque nettement que la phase nouvelle Ca₃₅(SiO₄)₁₆(PO4)₂ - synthèse d ou e - ne présente pas de raie étroite et intense de diffraction positionnée à environ 41,2°, contrairement à la larnite "pure" β Ca₂SiO₄ (synthèse c).

Sur la figure 2, a été également reporté, dans la partie supérieure "synthèse c", la fiche type JCPDS 40-0393 de la Nagelschmidtite Ca₇(SiO₄)₂(PO₄)₂.

Sur cette figure 2, on remarque nettement que la phase nouvelle Ca₃₅(SiO₄)₁₆(PO4)₂ - synthèse d ou e - ne présente pas de raie étroite et intense de diffraction positionnée à environ 31,5°, contrairement à la Nagelschmidtite Ca₇(SiO₄)₂(PO₄)₂, et ne présente quasiment pas non plus de raie étroite de diffraction positionnée à environ 46,6°, contrairement à la Nagelschmidtite Ca₇(SiO₄)₂(PO₄)₂.

L'absence de raie importante de diffraction à environ 31,5° et environ 41,2°, à moindre degré à environ 46,6°, semble donc distinguer cette phase cristallisée et nouvelle Ca₃₅(SiO₄)₁₆(PO4)₂ des autres phases les plus proches en structure et en composition.

### Exemple 4:

Cet exemple a pour but de comparer les caractéristiques essentielles concernant la valeur neutralisante et la teneur en "phosphore biodisponible" des amendements phosphatés selon l'invention à celles d'autres amendements ou d'autres fertilisants phosphatés.

A cet effet, on évalue, dans des sols de natures différentes, la contribution du phosphore apporté par différents fertilisants phosphatés à la nutrition de la plante d'une part, à la constitution de réserves biologiques dans le sol d'autre part.

Ces contributions ont été ici évaluées par une méthode, connue en elle-même, basée sur des mesures cinétiques d'échanges isotopiques des ions phosphates entre l'amendement à tester et la plante d'une part, le sol d'autre part (voir par exemple FARDEAU J.C., JAPPE J., 1976. dans C.R. Académie des Sciences, Paris, 282, 1137-1140) ; cette méthode de mesure fait notamment appel à un produit traceur radioactif.

Ainsi, après apport d'un fertilisant phosphaté à tester, dans des proportions prédéterminées et dans un sol donné, on mesure trois paramètres permettant de quantifier :
- la contribution du phosphore apporté, à la nutrition de la plante,
- la contribution du phosphore apporté, à constituer des réserves en phosphore biodisponible dans le sol.

On effectue des mesures, d'une part immédiatement après l'apport en phosphore (Tableaux II et III : colonne intitulée "immédiate"), d'autre part 1,3 mois après l'apport en phosphore (Tableaux II et III : colonne intitulée "après 1,3 mois").

On effectue des mesures sur des sols acides à neutres (pH = 5,3 à 7).

On a ici évalué les contributions du phosphore apporté par quatre types différents d'agents fertilisants :
- Amendement Sidérurgique Phosphaté ("ASP") obtenu par le procédé selon l'invention, présentant la composition suivante : CaO : 50% - MgO : 5% - SiO2 : 13% - P2O5 : 6% - Fer total (sous forme : Fe°, Fe²⁺ ou Fe³⁺) : 16%, le reste étant principalement des oligo-éléments (comme Mn : 2 à 3%) et des éléments résiduels comme Al2O3, TiO2.

Cet amendement selon l'invention a été obtenu par addition de 13% de pallite à du laitier liquide d'aciérie, sans autre additifs.
- Scorie Thomas ("ST") d'origine luxembourgeoise.
- Brushite ("PBc"), qui est un phosphate bicalcique de synthèse.
- TriSuperPhosphate (classique commercial).

La teneur en phosphore (exprimée en P2O5) et la valeur neutralisante (en équivalent CaO) de ces produits fertilisants est récapitulée dans le tableau I ci-après ; on a également fait figurer les résultats de test de solubilité citrique (effectués selon la norme NFU 42-212).

**Tableau I.**

| Produit fertilisant: | ASP | ST | Brushite | TSP |
|---|---|---|---|---|
| Teneur en P2O5 (%) | 6% | 17% | 20% | 47% |
| Solubilité citrique (%) | 69% | 92% | 94% | 99% |
| Valeur Neutralisante | 46 | 41 | 0 | 0 |

Les résultats comparatifs de contribution du phosphore du fertilisant testé à la nutrition de la plante sont reportés au tableau II ci-après (exprimés en "Part %").

Les résultats comparatifs de contribution du phosphore du fertilisant testé à la constitution de réserves dans le sol sont reportés au tableau III ci-après (exprimés en "Part %").

Chaque ligne des tableaux correspond à des sols différents, répertoriés de 1 à 8, correspondant à des pH différents (de 5,3 à 7) ; la dernière ligne ("moy.") indique la moyenne des résultats.

Ces tableaux indiquent la contribution immédiate d'une part (colonnes intitulées "immédiate"), et la contribution après 1,3 mois (colonnes intitulées "après 1,3 mois").

Pour chaque colonne ("immédiate" d'une part, "après 1,3 mois" d'autre part), on a également présenté les résultats obtenus pour les trois premiers fertilisants en les rapportant à ceux du TSP qui sert de référence (voir colonnes intitulées : "Efficacité/TSP").

Selon les tableaux II et III, on constate que l'efficacité du phosphore contenu dans l'ASP (amendement selon l'invention) est toujours supérieure à celle des autres fertilisants testés, notamment en matière d'efficacité différée et notamment en matière de constitution de réserves de phosphore biodisponible dans les sols acides à neutres.

Comme l'indique le tableau I, le test de solubilité citrique ne permettait pas de prévoir, bien au contraire, que l'amendement selon l'invention offrait un phosphore présentant la meilleure efficacité fertilisante.

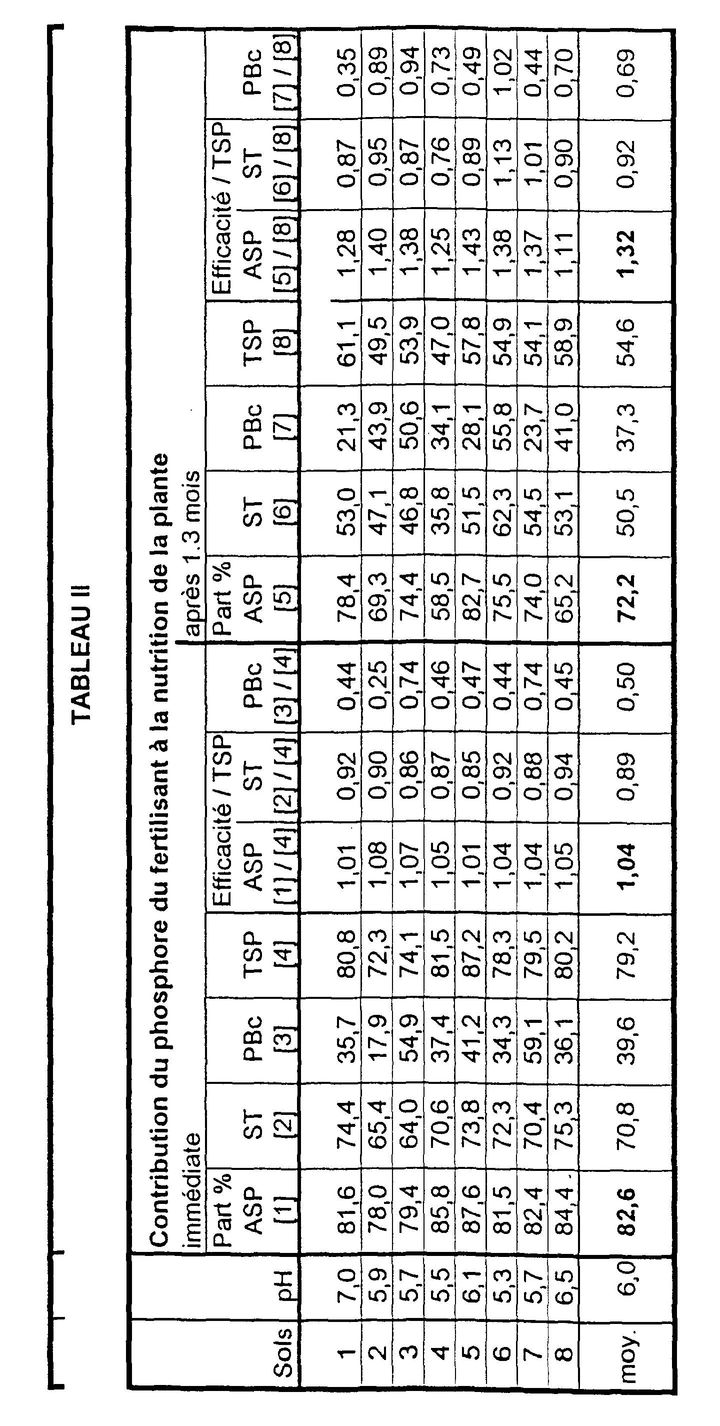

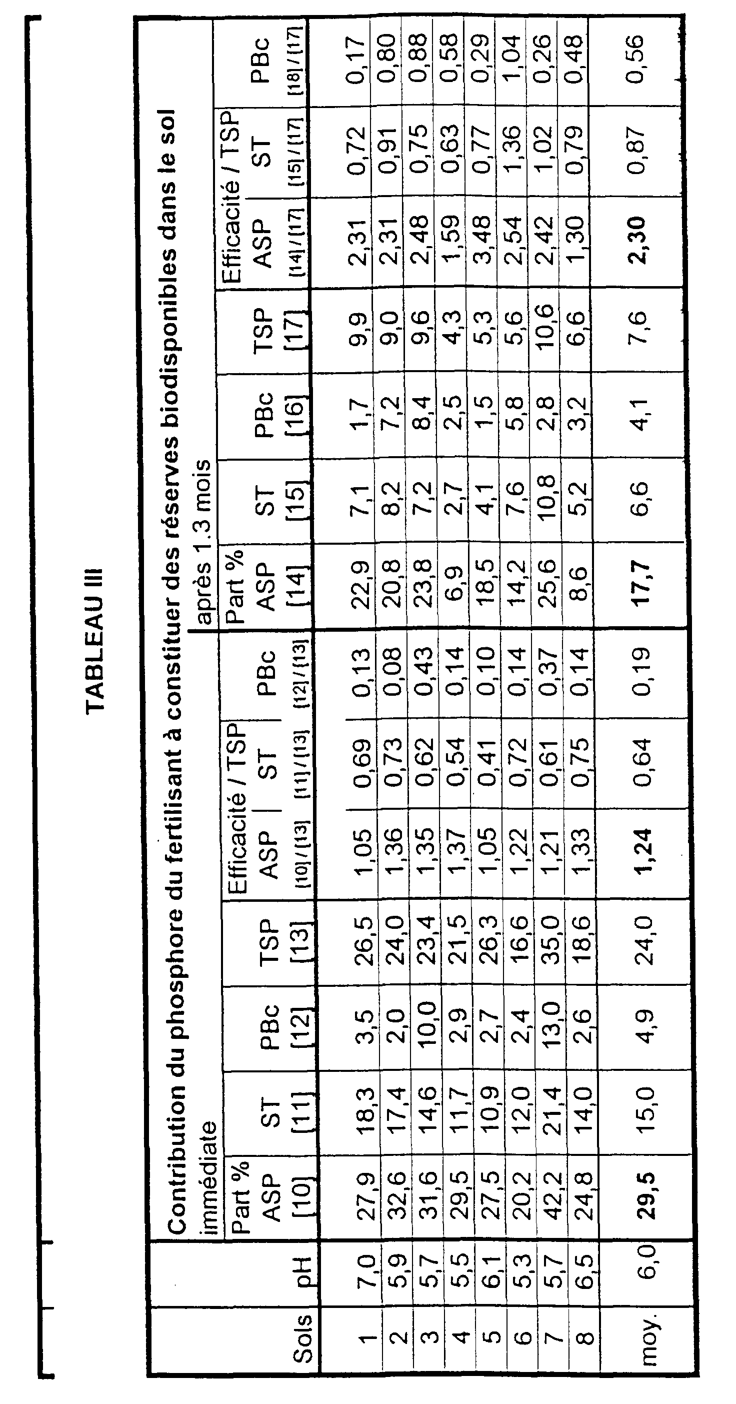

## Revendications

1. Procédé de préparation d'un amendement calcique phosphaté à partir de laitier d'aciérie à faible teneur en phosphore et d'un composé phosphoré qu'on fait réagir en les mélangeant de manière homogène, **caractérisé en ce que** le mélange dudit laitier et dudit composé phosphoré ,est effectué par projection dudit composé phosphoré sous forme granulométrique injectable dans un jet liquide dudit laitier, dans des conditions d'oxydo-réduction d'équilibre entre du fer métal (Fe⁰) et du fer ferreux (Fe⁺²), la composition et les proportions dudit composé phosphoré étant adaptées dans ledit mélange pour obtenir, à l'état refroidi, un amendement comprenant des phases silicates et silico-phosphates de calcium de type larnite (β Ca₂SiO₄ ou "C₂S") et/ou de type Ca₃₅(SiO₄)₁₆(PO4)₂. ou «16 C2S, C3P » incorporant le phosphore contenu dans ledit composé.

2. Procédé selon la revendication 1, **caractérisé en ce que** lesdites conditions d'oxydo-réduction sont adaptées pour que plus de 90% du magnésium contenu dans ledit amendement soit libre ou en substitution dans une wüstite.

3. Procédé selon l'une quelconque des revendications 1 à 2 **caractérisé en ce que** les proportions dudit composé phosphoré sont suffisamment faibles dans ledit mélange pour que ledit amendement obtenu ne contienne pas de phases de type nagelschmidite ni de type silico-carnotite à l'état refroidi.

4. Procédé selon l'une quelconque des revendications 1 à 3, **caractérisé en ce que** les proportions dudit composé phosphoré dans ledit mélange sont adaptées pour obtenir une proportion moyenne de phosphore, exprimée en P2O5, supérieure à 6 % et inférieure à 21,5 % dans lesdites phases de type larnite et/ou de type Ca₃₅(SiO₄)₁₆(PO4)₂. ou « 16 C2S, C3P ».

5. Procédé selon l'une quelconque des revendications 1 à 4 **caractérisé en ce que** les proportions dudit composé phosphoré sont adaptées dans ledit mélange pour obtenir une proportion moyenne de phosphore, exprimée en P2O5, supérieure ou égale à 3% dans ledit amendement.

6. Procédé selon l'une quelconque des revendications 1 à 5 **caractérisé en ce que** on injecte le composé phosphoré dans ledit jet immédiatement en amont de turbulences provoquées par ledit jet, notamment à son point d'arrivée dans une cuve de transfert.

7. Procédé selon l'une quelconque des revendications précédentes **caractérisé en ce que** ledit composé phosphoré présente une faible biodisponibilité agronomique en phosphore.

8. Procédé selon la revendication 7 **caractérisé en ce que** ledit composé phosphoré comprend des apatites, des pallites et/ou des crandalites.

9. Procédé selon l'une quelconque des revendications précédentes **caractérisé en ce que** le composé phosphoré contient des éléments alcalins.

10. Procédé selon l'une quelconque des revendications précédentes **caractérisé en ce qu'**on forme ledit jet liquide par écoulement dudit laitier d'un récipient métallurgique et **en ce que** ledit laitier contient au moins 1% d'acier.

11. Amendement calcique phosphaté du type contenant plus de 35% en poids de phases silicates et silico-phosphates de calcium, susceptible d'être obtenu par le procédé selon l'une quelconque des revendications 1 à 10, **caractérisé en ce que** :
- lesdites phases silicates et silico-phosphates sont de type larnite (β Ca₂SiO₄ ou "C₂S") et/ou de type Ca₃₅(SiO₄)₁₆(PO4)₂. ou « 16 C2S, C3P », à l'exclusion des phases nagelschmidtite et silicocarnotite,
- la proportion moyenne de phosphore, exprimée en P2O5, dans lesdites phases silicates et silico-phosphates est supérieure à 6 % et inférieure à 21,5 %,
- plus de 90% du magnésium contenu dans ledit amendement est, soit à l'état libre, soit en substitution dans une wüstite.

12. Amendement phosphaté selon la revendication 11, **caractérisé en ce qu'**il possède une valeur neutralisante supérieure ou égale à 45.

13. Amendement calcique phosphaté selon l'une quelconque des revendications 11 ou 12, **caractérisé en ce qu'**il présente une teneur globale en phosphore, exprimée en P2O5, comprise entre 5% et 9% .

14. Amendement calcique phosphaté selon la revendication 13, **caractérisé en ce qu'**il présente une teneur globale en phosphore, exprimée en P2O5, comprise entre 5% et 7,5% .

15. Utilisation de l'amendement selon l'une quelconque des revendications 11 à 14 pour fertiliser et pour amender un sol.

## Claims

1. Process for producing a calcium phosphate amendment from steelmaking slag with a low phosphorus content and from a phosphorus compound which are made to react by mixing them together in a uniform manner, **characterized in that** the mixing of the said slag and of the said phosphorus compound is carried out by blasting the said phosphorus compound in a particulate form enabling it to be injected into a liquid jet of the said slag, under equilibrium oxidation-reduction conditions between metallic iron (Fe⁰) and ferrous iron (Fe²⁺), the composition and the proportions of the said phosphorus compound in the said mixture being tailored in order to obtain, in the cooled state, an amendment comprising calcium silicates and silico-phosphates phases of the larnite (β-Ca₂SiO₄ or "C₂S") type and/or of the Ca₃₅(SiO₄)₁₆(PO₄)₂ or "16 C2S, C3P" type incorporating the phosphorus contained in the said compound.

2. Process according to Claim 2, **characterized in that** said oxidation-reduction conditions are tailored so that more than 90% of the magnesium contained in the said amendment is free or as substitution in a wustite.

3. Process according to either of Claims 1 and 2, **characterized in that** the proportions of the said phosphorus compound in the said mixture are sufficiently small for the said amendment obtained not to contain either phases of the nagelschmidtite type or of the silico-carnotite type in the cooled state.

4. Process according to any one of Claims 1 to 3, **characterized in that** the proportions of the said phosphorus compound in the said mixture are tailored in order to obtain an average phosphorus proportion, expressed as P₂O₅, of greater than 6% and of less than 21.5% in the said larnite-type and/or Ca₃₅(SiO₄)₁₆(PO₄)₂ or "16C2S, C3P"-type phases.

5. Process according to any one of Claims 1 to 4, **characterized in that** the proportions of the said phosphorus compound in the said mixture are tailored in order to obtain an average phosphorus proportion expressed as P₂O₅, of greater than or equal to 3% in the said amendment.

6. Process according to any one of Claims 1 to 5, **characterized in that** the phosphorus compound is injected into the said jet immediately upstream of the turbulence caused by the said jet, especially at its point of entry into a transfer tank.

7. Process according to any one of the preceding claims, **characterized in that** the said phosphorus compound exhibits a low phosphorus agronomic bioavailability.

8. Process according to Claim 7, **characterized in that** the said phosphorus compound comprises apatites, pallites and/or crandalites.

9. Process according to any one of the preceding claims, **characterized in that** the phosphorus compound contains alkaline metal elements.

10. Process according to any one of the preceding claims, **characterized in that** the said liquid jet is formed by the flow of the said slag from a metallurgical vessel and **in that** the said slag contains at least 1% steel.

11. Calcium phosphate amendment of the type containing more than 35% by weight of calcium silicate and silico-phosphate phases, which can be obtained by the process according to any one of Claims 1 to 10, **characterized in that**:
- said silicate and silico-phosphate phases are of the larnite (β-Ca₂SiO₄ or "C₂S") type and/or of the Ca₃₅(SiO₄)₁₆(PO₄)₂ or "16 C2S, C3P" type, with the exclusion of nagelschmidtite and silicocarnotite phases;
- the average phosphorus proportion, expressed as P₂O₅, in the said silicate and silico-phosphate phases is greater than 6% and less than 21.5%;
- more than 90% of the magnesium contained in the said amendment is either in the free state, or as substitution in a wustite.

12. Phosphate amendment according to Claim 11, **characterized in that** it has a neutralizing value of greater than or equal to 45.

13. Calcium phosphate amendment according to either of Claims 11 and 12, **characterized in that** it has an overall phosphorus content, expressed as P₂O₅, of between 5% and 9%.

14. Calcium phosphate amendment according to Claim 13, **characterized in that** it has an overall phosphorus content, expressed as P₂O₅, of between 5% and 7.5%.

15. Use of the amendment according to any one of Claims 11 to 14 for fertilizing and for amending a soil.

## Patentansprüche

1. Verfahren zur Herstellung eines phosphatierten, calciumhaltigen Bodenverbesserungsmittels ausgehend von Stahlwerksschlacke mit geringem Phosphorgehalt und einer Phosphorverbindung, die man miteinander zur Reaktion bringt, indem man sie auf homogene Weise mischt, **dadurch gekennzeichnet, dass** die Mischung der genannten Schlacke und der genannten Phosphorverbindung durchgeführt wird durch Einspritzen der genannten Phosphorverbindung in einspritzbarer Korngröße in einen flüssigen Strahl der genannten Schlacke unter Bedingungen einer ausgeglichenen Oxidoreduktion zwischen metallischem Eisen (Fe⁰) und Eisen(II) (Fe²⁺), wobei die Zusammensetzung und die Anteile der genannten Phosphorverbindung in dem genannten Gemisch so angepasst sind, um im abgekühlten Zustand ein Bodenverbesserungsmittel zu erhalten, das Calciumsilikat- und -silicophosphat-Phasen vom Typ Lamit (β Ca₂SiO₄ oder "C2S") und/oder vom Typ Ca₃₅(SiO₄)₁₆(PO₄)₂ oder "16 C2S, C3P" enthält, in die der Phosphor eingebracht ist, der in der genannten Verbindung enthalten ist.

2. Verfahren nach Anspruch 1, **dadurch gekennzeichnet, dass** die genannten Oxidoreduktionsbedingungen so angepasst sind, dass mehr als 90% des in dem genannten Bodenverbesserungsmittel enthaltenen Magnesiums frei oder substituiert in einem Wüstit vorliegen.

3. Verfahren nach einem der Ansprüche 1 bis 2, **dadurch gekennzeichnet, dass** die Anteile der genannten Phosphorverbindung in dem genannten Gemisch gering genug sind, dass das erzielte Bodenverbesserungsmittel im abgekühlten Zustand weder Phasen vom Typ Nagelschmidtit noch vom Typ Silicocarnotit enthält.

4. Verfahren nach einem der Ansprüche 1 bis 3, **dadurch gekennzeichnet, dass** die Anteile der genannten Phosphorverbindung in dem genannten Gemisch so angepasst sind, dass man einen durchschnittlichen Phosphoranteil, ausgedrückt in P2O5, von über 6% und von unter 21,5% in den genannten Phasen vom Typ Lamit und/oder vom Typ Ca₃₅(SiO₄)₁₆(PO₄)₂ oder "16 C2S, C3P" erhält.

5. Verfahren nach einem der Ansprüche 1 bis 4, **dadurch gekennzeichnet, dass** die Anteile der genannten Phosphorverbindung in dem genannten Gemisch so angepasst sind, dass man einen durchschnittlichen Phosphoranteil, ausgedrückt in P2O5, von über oder gleich 3% in dem genannten Bodenverbesserungsmittel erhält.

6. Verfahren nach einem der Ansprüche 1 bis 5, **dadurch gekennzeichnet, dass** man die Phosphorverbindung in den genannten Strahl unmittelbar stromaufwärts von Wirbelströmungen einspritzt, die von dem genannten Strahl hervorgerufen werden, insbesondere am Punkt seines Eintreffens in einem Transportbehälter.

7. Verfahren nach einem der vorhergehenden Ansprüche, **dadurch gekennzeichnet, dass** die genannte Phosphorverbindung eine geringe landwirtschaftliche Bioverfügbarkeit an Phosphor aufweist.

8. Verfahren nach Anspruch 7, **dadurch gekennzeichnet, dass** die genannte Phosphorverbindung Apatite, Pallite und/oder Crandalite umfasst.

9. Verfahren nach einem der vorhergehenden Ansprüche, **dadurch gekennzeichnet, dass** die Phosphor Alkalielemente enthält.

10. Verfahren nach einem der vorhergehenden Ansprüche, **dadurch gekennzeichnet, dass** man den genannten flüssigen Strahl durch Ausgießen der genannten Schlacke aus einem metallurgischen Ofen bildet und dass die genannte Schlacke mindestens 1% Stahl enthält.

11. Phosphatiertes, calciumhaltiges Bodenverbesserungsmittel von dem Typ, der mehr als 35 Gew.% Calciumsilikat- und -silicophosphat-Phasen enthält und durch das Verfahren nach einem der Ansprüche 1 bis 10 hergestellt werden kann, **dadurch gekennzeichnet, dass**:
- die genannten Silikat- und Silicophosphat-Phasen vom Typ Larnit (β Ca₂SiO₄ oder "C2S") und/oder vom Typ Ca₃₅(SiO₄)₁₆(PO₄)₂ oder "16 C2S, C3P" sind, unter Ausschluss der Phasen Nagelschmidtit und Silicocarnotit,
- der durchschnittliche Phosphoranteil, ausgedrückt in P205, in den genannten Silikat- und Silicophosphatphasen über 6% und unter 21,5% beträgt;
- mehr als 90% des in dem genannten Bodenverbesserungsmittel enthaltenen Magnesiums im freien Zustand oder substituiert in einem Wüstit vorliegen.

12. Phosphatiertes Bodenverbesserungsmittel nach Anspruch 11, **dadurch gekennzeichnet, dass** es einen Neutralisationswert von über oder gleich 45 besitzt.

13. Phosphatiertes, calciumhaltiges Bodenverbesserungsmittel nach einem der Ansprüche 11 oder 12, **dadurch gekennzeichnet, dass** es einen Gesamtgehalt an Phosphor, ausgedrückt in P2O5, zwischen 5% und 9% aufweist.

14. Phosphatiertes, calciumhaltiges Bodenverbesserungsmittel nach Anspruch 13, **dadurch gekennzeichnet, dass** es einen Gesamtgehalt an Phosphor, ausgedrückt in P2O5, zwischen 5% und 7,5% aufweist.

15. Verwendung des Bodenverbesserungsmittels nach einem der Ansprüche 11 bis 14 zur Düngung und Verbesserung eines Bodens.
